# EUROPÄISCHE PATENTSCHRIFT

(11) **EP 4 086 091 B1**
(45) Veröffentlichungstag und Bekanntmachung des Hinweises auf die Patenterteilung: **22.11.2023**
(21) Anmeldenummer: 21172516.3
(22) Anmeldetag: 06.05.2021
(51) Int. Cl.: B60G 3/14, B60G 17/016, B62D 61/10

(54) **AUTOMOBIL SOWIE VERFAHREN ZUM BETREIBEN EINES AUTOMOBILS**
AUTOMOBILE AND METHOD FOR OPERATING SAME
AUTOMOBILE, AINSI QUE PROCÉDÉ DE FONCTIONNEMENT D'UN AUTOMOBILE

(43) Veröffentlichungstag der Anmeldung: 09.11.2022
(73) Patentinhaber: Blue Technologies BV, 4387 PK Vlissingen (NL)
(72) Erfinder: Benner, Moritz, 61279 Grävenwiesbach (DE)
(74) Vertreter: Wunderlich & Heim Patentanwälte Partnerschaftsgesellschaft mbB

(56) Entgegenhaltungen:
- WO-A1-97/19827
- DE-A1- 3 409 447
- DE-A1-102010 060 274
- US-A- 3 523 697
- US-A- 4 007 949
- US-A- 4 079 798
- US-A- 5 938 238
- US-A1- 2013 264 805
- US-A1- 2018 154 961

## Beschreibung

Die Erfindung betrifft ein Automobil mit einem Fahrzeuggrundkörper, mit einer Vorderradeinheit mit zwei Vorderrädern, welche unter Ausbildung einer Vorderradachse lenkbar an dem Fahrzeuggrundkörper gelagert sind, sowie mit einer Hinterradeinheit, welche mindestens zwei Hinterräder aufweist, welche angetrieben und unter Ausbildung einer ersten Hinterradachse an dem Fahrzeuggrundkörper gelagert sind.

Ferner betrifft die Erfindung ein Verfahren zum Betreiben eines derartigen Automobils.

Sportwägen gibt es in verschiedenen Ausprägungen. Zum einen sind im unteren Preissegment bereits entsprechend motorisierte Fahrzeuge oder Automobile von Mittelklasseherstellern vorhanden. Das highend Preissegment wird durch sogenannte Hypercars definiert, die meist Preise im siebenstelligen Bereich haben und oft nur in Kleinserien mit streng limitierter Stückzahl hergestellt werden.

Derartige Fahrzeuge bieten ihrem Besitzer ein entsprechend hohes Leistungsspektrum, wobei einer der hierbei relevanten Punkte die Beschleunigung ist.

Im Automobilsport sind Beschleunigungsrennen, die auch Dragsterrennen bezeichnet werden, bekannt, bei denen speziell hierfür getunte beziehungsweise entwickelte Fahrzeuge antreten. Neben der Problematik, die Antriebskraft über entsprechend angetriebene Räder auf die Fahrbahn zu übertragen und so in Vortrieb und Beschleunigung umzusetzen, besteht gerade bei Automobilen mit einem sehr hohen Beschleunigungspotential das Problem, dass diese dazu tendieren, im vorderen Bereich weniger Druck auf die Straße aufzubauen und die Front anzuheben. Dies kann sogar bis zu einem Überschlag des Fahrzeuges führen.

Um dies zu verhindern ist bei Dragsterrennen unter anderem ein sogenannter Wheelybar bekannt, der als Verlängerung des Automobils angesehen werden kann und mit einem weiteren Rad einen zusätzlichen Straßenkontakt ermöglicht. So wird ein Heben und Entlasten des Frontbereichs des Automobils minimiert.

Die US 4 007 949 zeigt ein Fahrzeug, gemäß dem Oberbegriff von Anspruch 1, welches eine federnde Hinterachsaufhängung zeigt, an der ein nicht angetriebenes Stützrad an einem Ausleger versetzt zur Hinterachse angeordnet ist. Bei der Beschleunigung des Fahrzeugs, welche zu einer verkippenden Einfederung der Achsaufhängung führt, erfolgt automatisch ein Andrücken der Stützräder, welches einem Abheben der Vorderräder entgegenwirkt.

Andererseits ist es auch bekannt, einen entsprechend langen Radstand vorzusehen und/oder hohes Gewicht im Bereich der Vorderachse vorzusehen.

Alle diese Möglichkeiten führen zwar zu dem gewünschten Effekt, dass ein Entlasten der Vorderräder beziehungsweise ein Anheben der Front des Automobils minimiert oder verhindert wird, jedoch stellten sie zum einen optisch unschöne Lösungen dar, die auch im Straßenverkehr nicht erlaubt sind. Zum anderen verringert das Vorsehen von zusätzlichen Gewichten wiederum das Leistungsgewicht eines derartigen Automobils, so dass dies auch unerwünscht ist.

Der Erfindung liegt daher die **Aufgabe** zugrunde, ein Automobil sowie ein Verfahren zum Betreiben des Automobils anzugeben, bei denen ein Entlasten beziehungsweise ein Anheben des vorderen Bereichs beim Beschleunigen reduziert, idealerweise verhindert, wird.

Diese Aufgabe wird zum einen durch ein Automobil mit den Merkmalen des Anspruchs 1 sowie ein Verfahren zum Betreiben eines Automobils mit den Merkmalen des Anspruchs 10 gelöst.

Vorteilhafte Ausführungsformen der Erfindung sind in den Unteransprüchen, in der Beschreibung sowie in der Figur und deren Erläuterung angegeben.

Entsprechend der Erfindung ist vorgesehen, dass die Hinterradeinheit zusätzlich mindestens ein Innenrad aufweist, welches zwischen den beiden Hinterrädern entlang einer zweiten Hinterradachse gelagert ist. Diese zweite Hinterradachse ist gegenüber der ersten Hinterradachse axial nach hinten versetzt. Ferner ist eine Stützeinrichtung, insbesondere eine aktive Stützeinrichtung, vorgesehen, durch welche zwischen dem mindestens einen Innenrad und dem Fahrzeuggrundkörper eine Stützkraft erzeugbar ist, durch welche bei einem Beschleunigen des Automobils die Vorderradeinheit gegen den Boden drückbar ist.

Im Sinne der Erfindung kann als Fahrzeuggrundkörper beispielsweise eine Karosserie oder ein entsprechender tragender Rahmen des Fahrzeuges verstanden werden. Dies ist abhängig davon, ob ein Tragrahmen oder eine selbsttragende Karosserie vorgesehen ist. Wesentlich ist hierbei, dass diese Baueinheit ausgelegt ist, um die Kräfte, die auf das Automobil einwirken, aufzunehmen und zu verteilen.

Der Erfindung liegt die Idee zugrunde, in normaler Fahrtrichtung hinter der ersten Hinterradachse mindestens ein weiteres Innenrad anzuordnen. Dieses Innenrad dient zur weiteren Abstützung des Automobils beim Beschleunigen und verhindert oder reduziert eine Nickbewegung in Bezug auf eine Hochachse des Automobils beim Beschleunigen. Ein Beschleunigen im Sinne der Erfindung kann auch ein negatives Beschleunigen umfassen, also ein Abbremsen.

Zusätzlich ist entsprechend der Erfindung eine Stützeinheit vorgesehen. Diese ist im Wesentlichen zwischen der Lagerung beziehungsweise der Aufhängung des Innenrades und dem Fahrzeuggrundkörper oder der äußeren Hinterräder vorgesehen. Über die Stützeinrichtung ist eine Stützkraft erzeugbar, durch welche bei der Beschleunigung des Automobils insbesondere die Vorderradeinheit gegen den Boden gedrückt wird. Anders ausgedrückt, kann mittels der Stützeinrichtung aktiv eine Kraft auf den Fahrzeuggrundkörper aufgebracht werden, die gegen das Anheben des vorderen Bereichs des Automobils wirkt. Hierdurch ist es möglich, die Anpresskraft gerade im vorderen Bereich des Automobiles auf die Straße sogar zu definieren und so eine sichere und effiziente Kraftübertragung und Führung des Gesamtsystems Automobil auf dem Untergrund zu ermöglichen.

Das Innenrad ist vorzugsweise zwischen den beiden Hinterrädern versetzt nach hinten, in normaler Fahrtrichtung, angeordnet. An dieser Position kann mittels der Stützeinrichtung die Stützkraft erzeugt werden, ohne dass gleichzeitig die Fahreigenschaften des Automobils negativ beeinflusst werden.

Bevorzugt ist es, wenn zwei Innenräder entlang der zweiten Hinterachse angeordnet sind. Beim Vorsehen von zwei Innenrädern ist es wesentlich, dass diese zwischen den beiden Hinterrädern angeordnet sind. Betrachtet man die Spurweite, so haben die zwei Innenräder eine geringere Spurweite als die auf der ersten Hinterachse befindlichen zwei Hinterräder. Hierdurch bleibt trotz der zusätzlichen Räder ein attraktives Kurvenfahrverhalten erhalten. Um dieses Kurvenfahrverhalten zu unterstützen, kann die Stützeinrichtung sogar invers funktionieren und den Druck der Innenräder auf den Boden verringern, wenn keine Beschleunigung mehr auf das Automobil einwirkt, um das Kurvenfahrverhalten weiter zu verbessern.

Zwei Innenräder bieten grundsätzlich gegenüber einem Innenrad den Vorteil, dass ein besseres Abstützen möglich ist und somit weniger Kraft auf die einzelnen Innenräder aufgebracht werden muss.

Erfindungsgemäß sind die Hinterräder der ersten Hinterradachse und das mindestens eine Innenrad der zweiten Hinterradachse angetrieben. Insbesondere durch das Antreiben des Innenrades kann die zusätzliche Kontaktfläche mit dem Untergrund genutzt werden, wodurch die gesamte zur Verfügung stehende Antriebskraft auf eine größere Kontaktfläche verteilt wird. So kann erreicht werden, dass die zur Beschleunigung zur Verfügung stehende Kraft hauptsächlich in die Beschleunigung umgesetzt wird und nicht durch beispielsweise durchdrehende Reifen verloren geht.

Der axiale Abstand der ersten Hinterradachse zu der zweiten Hinterradachse kann gleich oder kleiner als der Durchmesser der Hinterräder und/oder der Innenräder sein. Mit einer solchen Ausführung wird erreicht, dass das mindestens eine Innenrad nicht außerhalb der Karosserie des Automobils liegt und so optisch ein weiterhin attraktiver Eindruck des Automobils vorliegt. Zusätzlich würde durch ein außerhalb der Karosserie liegendes Innenrad die Aerodynamik negativ beeinflusst, was wiederum die maximal mögliche Höchstgeschwindigkeit verringern würde. Der Durchmesser der Hinterräder und der Innenräder kann hierbei identisch sein.

Bevorzugt sind die Hinterräder und/oder das mindestens einen Innenrad an jeweils einer Radaufhängungsschwinge gelagert, welche hohl ausgebildet ist. Hier kann eine Antriebswelle innerhalb der hohlen Radaufhängungsschwinge zur Übertragung eines Antriebsdrehmomentes an das daran gelagerte Rad angeordnet sein. Mit dieser Konstruktion wird ermöglicht, dass jedes Rad, sowohl die Hinterräder als auch das mindestens einen Innenrad, separat angetrieben werden kann. Dies ermöglicht höhere Freiheitsgrade in der Beschleunigung und Steuerung, da die Räder unterschiedlich, je nach Untergrund, mit einem Antriebsdrehmoment beaufschlagt werden können. Außerdem kann dies beim Kurvenfahren eingesetzt werden, um die unterschiedlichen Kurvenradien der einzelnen Räder abzustimmen. Zudem wird durch einen Antrieb durch insbesondere längs der Fahrzeuglängsrichtung verlaufende hohle Radaufhängeschwingen, auch Längslenker genannt, eine besonders kompakte Anordnung erzielt.

Somit bietet diese Konstruktion den Vorteil, dass im Vergleich zu herkömmlichen Antriebskonzepten, weniger Platz auf Höhe der Räder für die Bauteile des Antriebes benötigt wird.

Grundsätzlich kann die Stützkraft in der Stützeinrichtung beliebig erzeugt werden. Bevorzugt ist es, wenn hierfür ein Krafterzeugungselement, insbesondere ein aktives Krafterzeugungselement, verwendet wird. Die Stützeinrichtung kann so beispielsweise in Form eines Druckzylinders, insbesondere eines Hydraulikdruckzylinders, ausgeführt sein. Grundsätzlich sind aber auch andere Möglichkeiten für ein Krafterzeugungselement denkbar. Je nach exakter Ausführung können beispielsweise auch Elektromotoren, elektromagnetische Zylinder oder auch andere elektromagnetische Anordnungen verwendet werden.

Bevorzugt ist eine Steuerung vorgesehen, durch welche die Stützeinrichtung aktiv ansteuerbar ist, wobei die Stützkraft veränderbar ist. Auf diese Weise können die auf das Automobil einwirkenden Kräfte berücksichtigt werden und die Stützkraft der Stützeinrichtung jeweils entsprechend eingestellt werden, so dass ein optimales Fahrverhalten ermöglicht wird.

Hierzu kann die Steuerung programmierbar und/oder programmgesteuert betreibbar sein, so dass auch nach der Auslieferung oder sogar während einer Fahrt die Steuerung angepasst werden kann. Hierdurch ergeben sich unterschiedliche Optimierungsmöglichkeiten, wodurch deutlich höhere Freiheitsgrade für ein derartiges Automobil vorliegen.

In einer weiteren Ausführungsform sind ein oder mehrere Sensoren vorgesehen, durch welche eine Beschleunigung, eine Geschwindigkeit, eine Andruckkraft der Vorderräder auf den Boden und/oder weitere Fahrzustandswerte erfassbar sind. Grundsätzlich können der eine oder die mehreren Sensoren auch nur einen der Werte oder eine beliebige Kombination der aufgeführten Werte sowie weitere Größen zu Fahrzustandswerten erfassen.

Es ist außerdem vorteilhaft, wenn der eine oder die mehreren Sensoren mit der Steuerung in Verbindung stehen, wobei durch die Steuerung die Stützeinrichtung abhängig von den erfassten Fahrzustandswerten ansteuerbar ist. Auf diese Weise kann erreicht werden, dass die Stützkraft der Stützeinrichtung an die entsprechenden Umgebungsvariablen angepasst wird, so dass durch diese Konstruktion eine effiziente Kraftübertragung der Antriebsenergie auf den Untergrund, beispielsweise eine Straße, ermöglicht wird und während des Beschleunigung ausreicht Kontakt zwischen der Vorderradeinheit und dem Boden besteht.

Ferner betrifft die Erfindung ein Verfahren zum Betreiben eines Automobils, wobei bei einem Beschleunigen des Automobils mittels der Stützeinrichtung zwischen dem mindestens einem Innenrad und dem Fahrzeuggrundkörper eine Stützkraft erzeugt wird, durch welche die Vorderradeinheit des Automobils gegen den Boden gedrückt wird. Mit anderen Worten wirkt die Stützkraft der Kraft entgegen, die die Vorderradeinheit beziehungsweise den vorderen Bereich des Automobils weg von der Straße über den Drehpunkt der Hinterradachse anheben würde. So wird eine bessere Beschleunigung ermöglicht, da mehr Vortrieb auf die Straße aufgebracht werden kann und die Beschleunigung nicht aus Sicherheitsgründen reduziert werden muss, da ein Anheben des Frontbereichs des Automobils auftritt.

Die Erfindung wird nachfolgend anhand eines schematischen Ausführungsbeispiels unter Bezugnahme auf die Figur näher erläutert. Hierbei zeigt:
- Fig. 1: eine stark schematisierte Ansicht eines erfindungsgemäßen Automobils;
- Fig. 2: eine perspektivische Ansicht eines Hinterrades mit einer Radaufhängeschwinge für die Erfindung;
- Fig. 3: eine Querschnittsansicht durch die Radaufhängungsanordnung nach Fig. 2;
- Fig. 4: eine perspektivische Ansicht einer Radaufhängeanordnung nach einer weiteren Ausführungsform der Erfindung entsprechend Fig. 2 und
- Fig. 5: eine Querschnittsansicht durch die Radaufhängeanordnung nach Fig.4.

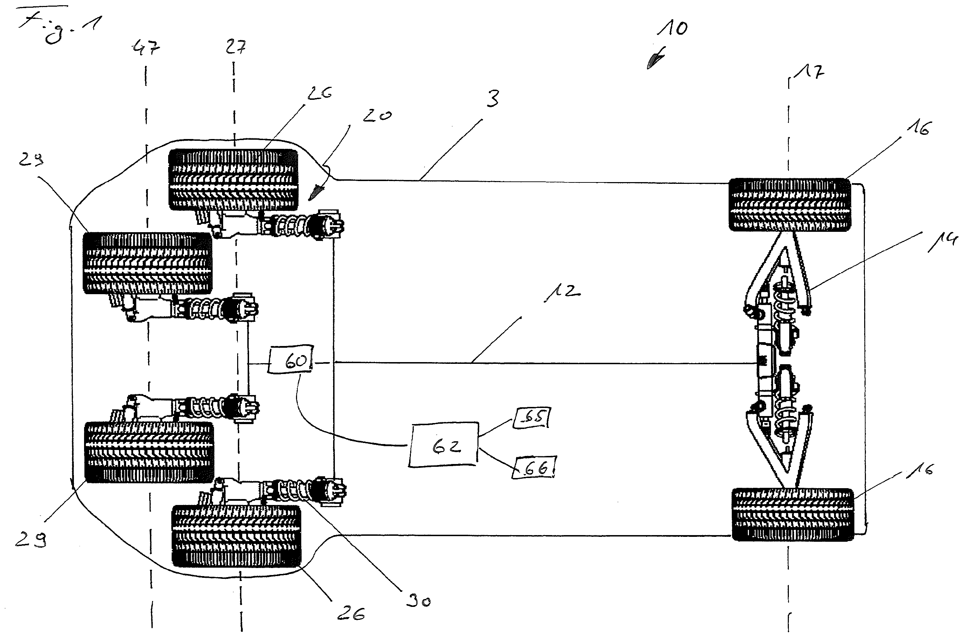

In Figur 1 ist eine schematische Ansicht eines erfindungsgemäßen Automobils 10 dargestellt, anhand der im Folgenden die Erfindung näher erläutert wird.

Das erfindungsgemäße Automobil 10 besitzt eine Karosserie 3, die in Figur 1 nur angedeutet ist. Zusätzlich hat das Automobil 10 einen Fahrzeuggrundkörper 12, der ebensfalls nur angedeutet ist.

An dem Fahrzeuggrundkörper 12 ist eine Vorderradeinheit 14 vorgesehen. Diese weist zwei Vorderräder 16 auf, die eine Vorderradachse 17 bilden. Im rückwärtigen Bereich des Automobils 10 befindet sich eine Hinterradeinheit 20, die ebenfalls zumindest teilweise mit dem Fahrzeuggrundkörper 12 verbunden ist.

Die Hinterradeinheit 20 weist zwei äußere Hinterräder 26 auf, die entlang einer ersten Hinterradachse 27 angeordnet sind. Zusätzlich weist die Hinterradeinheit 20 zwei Innenräder 29 auf, welche auf einer zweiten Hinterradachse 47 angeordnet sind. Sowohl die äußeren Hinterräder 26 als auch die Innenräder 29 besitzen jeweils eine Radaufhängungsanordnung mit einer Radaufhängeschwinge 30, mittels der sie mit dem Fahrzeuggrundkörper 12 auslenkbar verbunden sind. Innerhalb jeder Radaufhängeschwinge 30, welche jeweils hohl ausgebildet ist, ist eine Radantriebswelle zur Übertragung des Antriebsdrehmoments an das jeweilige Hinterrad 26 beziehungsweise an das jeweilige Innenrad 29 angeordnet.

Wie in Figur 1 gezeigt, weisen die beiden Hinterräder 26 einen breiteren Radstand auf als die beiden Innenräder 29. Des Weiteren sind die beiden Innenräder 29 in Fahrtrichtung nach hinten bezüglich der ersten Hinterradachse 27 versetzt angeordnet. Hierbei ist die zweite Hinterradachse 47 etwa um den Durchmesser der Hinterräder 26 beziehungsweise Innenräder 29 axial in Fahrtrichtung versetzt. Grundsätzlich sollte der Versatz nicht größer sein als der Durchmesser der Hinterräder 26 beziehungsweise der Innenräder 29.

Zusätzlich ist eine Stützeinrichtung 60 vorgesehen. Diese ist zwischen den Innenrädern 29 und den Fahrzeuggrundkörper 12 angeordnet. Über die Stützeinrichtung 60 kann eine Stützkraft erzeugt werden, die beim Beschleunigen des Automobils 10 die Vorderradeinheit 14 gegen den Boden drückt. Auf diese Art wird ein Abheben des Vorderteils des Automobils 10 beim Beschleunigen reduziert oder sogar verhindert. Auch wird hierdurch der Anpressdruck der Vorderräder 16 erhöht, so dass, wenn diese ebenfalls angetrieben sind, die Traktion verbessert wird.

Zur Steuerung der Stützeinrichtung 60 ist eine Steuerung 62 vorgesehen, die in der hier dargestellten Ausführungsform zwei Sensoren 65 und 66 aufweist. Bei diesen Sensoren 65, 66 kann es sich beispielsweise um Sensoren zum Bestimmen der Beschleunigung des Automobils 10 in alle drei Raumrichtungen handeln. Die Sensoren 65, 66 können alternativ oder zusätzlich auch den Anpressdruck der Vorderradachse 17, die Geschwindigkeit selbst oder andere Fahrzustandswerte, beispielsweise die Querbeschleunigung, erfassen. Basierend auf diesen Werten steuert die Steuerung 62 die Stützeinrichtung 60. Hierfür kann die Stützeinrichtung 60 einen Druckzylinder, beispielsweise einen Hydraulikzylinder, aufweisen.

Durch ein Integrieren der Radantriebswelle in eine längs gerichtete Radaufhängeschwinge 30 der Hinterräder 26 wird eine insgesamt sehr kompakte Anordnung der Radaufhänge- und Radantriebsanordnung erreicht. Hierdurch wird es entsprechend der bevorzugten Ausgestaltung nach Fig. 1 ermöglicht, die Hinterradeinheit 20 nicht nur mit zwei äußeren Hinterrädern 26 auszubilden, sondern zusätzlich mit zwei inneren Hinterrädern 29 vorzusehen, welche in Querrichtung und in Längsrichtung versetzt zu den äußeren Hinterrädern 26 angeordnet und mit diesen angetrieben sind.

Die inneren Hinterräder 29 können dabei ebenso über die zuvor beschriebene Radaufhängeschwinge 30 mit einer inneren Radantriebswelle aufgehängt und zusätzlich drehend angetrieben sein. Durch diese Anordnung kann ein Drehmoment auf insgesamt mehr als zwei Hinterräder, im vorliegenden Fall auf vier Hinterräder, aufgebracht werden. Dies ermöglicht eine besonders gute Traktion auch beim Aufbringen großer Antriebsleistungen.

Zudem kann die Traktion noch dadurch erhöht werden, dass zwischen der Anordnung der inneren Hinterräder 29, welche gegenüber den äußeren Hinterrädern 26 in Fahrtrichtung nach hinten versetzt sind, aktiv eine Stützkraft gegenüber dem Fahrzeuggrundkörper 12 aufgebracht werden kann, mit welcher einer unerwünschten Nickbewegung des Fahrzeuggrundkörpers 12 beim Anfahren wirksam entgegengewirkt werden kann. Dies fördert weiter das Aufbringen auch hoher Antriebsleistungen auf die angetriebenen Hinterräder 26 bei hoher Fahrstabilität des Automobils, was insbesondere für Sportwägen mit hoher Antriebsleistung vorteilhaft und wünschenswert ist.

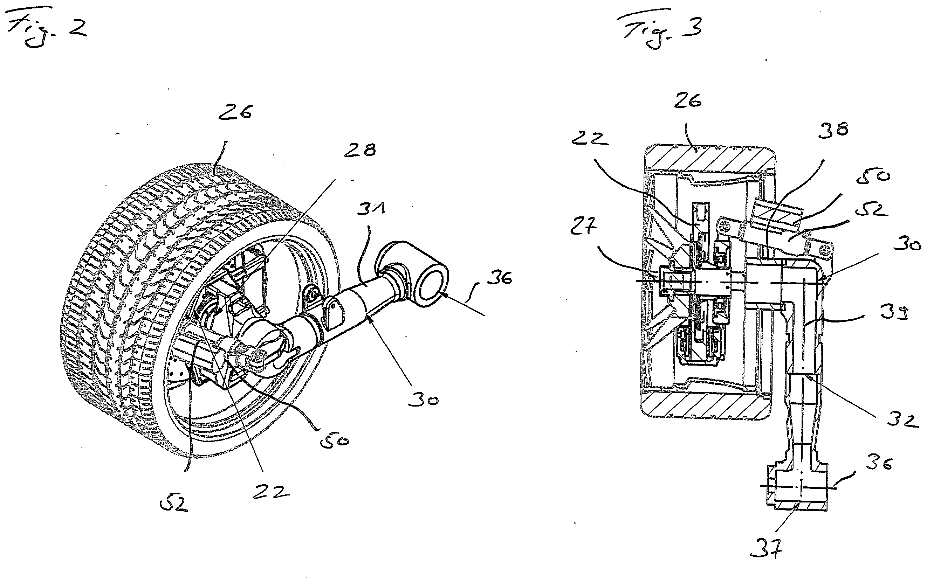

Gemäß einer bevorzugten Variante bei einem erfindungsgemäßen Automobil 10 ist gemäß den Figuren 2 und 3 eine Stelleinrichtung mit einem Stellglied 50 mit Stellzylinder 52 ausgebildet, über welchen ein Radträger 28 des Hinterrades 26 über eine Hochachse des Automobils 10 zum Bewirken einer Hinterradlenkung um einige Winkelgrad ausgelenkt werden kann. Der Stellzylinder 52 ist dabei vorzugsweise ein Hydraulikzylinder.

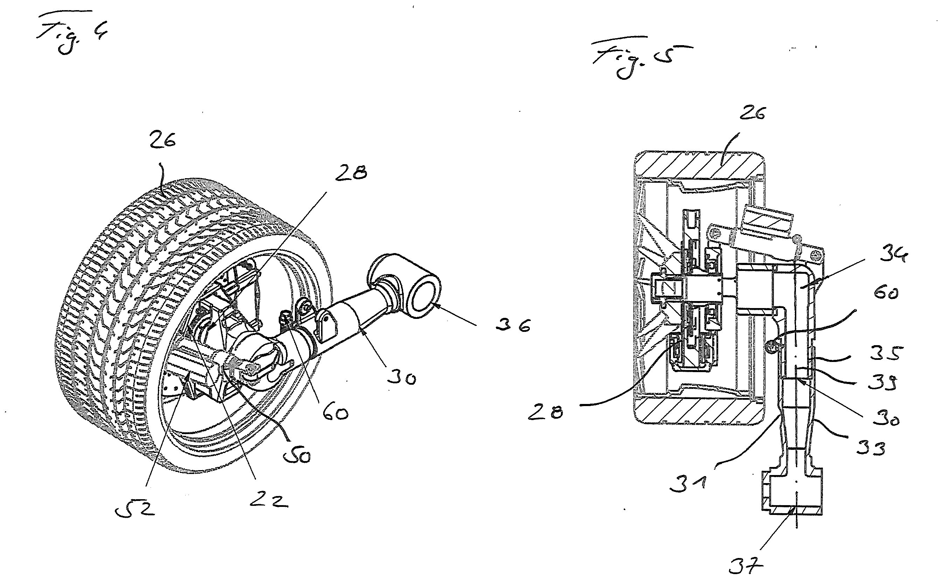

Gemäß den Figuren 4 und 5 ist eine abgewandelte Ausführungsform dargestellt, wobei der grundsätzliche Aufbau der Radaufhängeanordnung der Anordnung gemäß den Figuren 2 und 3 entspricht. Im Unterschied zu der Ausgestaltung nach den Figu-ren 2 und 3 ist gemäß den Figuren 4 und 5 der Mittenholm 31 der Radaufhängeschwinge 30 zweiteilig mit einem ersten Holmteil 33 und einem zweiten Holmteil 34 ausgebildet.

An dem ersten Holmteil 33 ist die erste Winkelbuchse 37 fest angebracht, so dass das erste Holmteil 33 schwenkbar am Fahrzeuggrundkörper 12 gelagert ist. Das zweite Holmteil 34 weist einen rohrförmigen Lagerabschnitt 35 auf, welcher in einem entsprechenden Aufnahmeraum des ersten Holmteiles 33 drehbar um die Holmlängsachse 39 gelagert ist. An dem zweiten Holmteil 34 mit der zweiten Winkelbuchse 38 ist entsprechend dem vorausgegangen Ausführungsbeispiel der Radträger 28 mit dem Hinterrad 26 gelagert und angeordnet.

Durch die um die Holmlängsachse 39 verdrehbare Lagerung des zweiten Holmteiles 34 am ersten Holmteil 33 kann eine Verstellung des Sturzes des Rades 26 eingestellt werden. Hierzu ist an dem zweiten Holmteil 34 ein Einstellglied 60 angeordnet, welches insbesondere als ein Schneckengetriebe ausgebildet ist. Durch Ansteuerung des Schneckengetriebes kann eine Verdrehung des zweiten Holmteiles 34 um die Holmlängsachse 39 gegenüber dem ersten Holmteil 33 eingestellt und so ein Sturz des Hinterrades 26 verändert werden.

Mittels der Erfindung ist es möglich, selbst bei einer sehr hohen Beschleunigung zu erreichen, dass die Vorderräder 16 eines Automobils 10 weiterhin Bodenkontakt halten und so das Automobil 10 einerseits steuerbar bleibt und zum anderen eine möglichst gleichmäßige Verteilung der Andruckkräfte erreicht wird.

## Patentansprüche

1. Automobil mit
- einem Fahrzeuggrundkörper (12),
- einer Vorderradeinheit (14) mit zwei Vorderrädern (16), welche unter Ausbildung einer Vorderradachse (17) lenkbar an dem Fahrzeuggrundkörper (12) gelagert sind, und
- einer Hinterradeinheit (20), welche mindestens zwei Hinterräder (26) aufweist, welche angetrieben und unter Ausbildung einer ersten Hinterradachse (27) an dem Fahrzeuggrundkörper (12) gelagert sind,
- wobei die Hinterradeinheit (20) zusätzlich mindestens ein Innenrad (29) aufweist, welches zwischen den zwei ersten Hinterrädern (26) entlang einer zweiten Hinterradachse (47) gelagert ist,
- wobei die zweite Hinterradachse (47) gegenüber der ersten Hinterradachse (27) axial nach hinten versetzt ist und
- wobei eine Stützeinrichtung (60) vorgesehen ist, durch welche zwischen dem mindestens einen Innenrad (29) und dem Fahrzeuggrundkörper (12) eine Stützkraft erzeugbar ist, durch welche bei einem Beschleunigen des Automobils (10) die Vorderradeinheit (14) gegen den Boden drückbar ist,
**dadurch gekennzeichnet,**
**dass** die ersten Hinterräder (26) der ersten Hinterradachse (27) und das mindestens eine Innenrad (29) der zweiten Hinterradachse (47) angetrieben sind.

2. Automobil nach Anspruch 1,
**dadurch gekennzeichnet,**
**dass** zwei Innenräder (29) entlang der zweiten Hinterradachse (47) angeordnet sind.

3. Automobil nach einem der Ansprüche 1 bis 2,
**dadurch gekennzeichnet,**
**dass** ein axialer Abstand der ersten Hinterradachse (27) zu der zweiten Hinterradachse (47) gleich oder kleiner als ein Durchmesser der Hinterräder (26) und/oder der Innenräder (29) ist.

4. Automobil nach einem der Ansprüche 1 bis 3,
**dadurch gekennzeichnet,**
**dass** die Hinterräder (26) und/oder das mindestens eine Innenrad (29) an jeweils einer Radaufhängeschwinge (30) gelagert sind, welche hohl ausgebildet ist, und dass eine Radantriebswelle innerhalb der hohlen Radaufhängeschwinge (30) zur Übertragung eines Antriebsdrehmoments an das daran gelagerte Rad (26, 29) angeordnet ist.

5. Automobil nach einem der Ansprüche 1 bis 4,
**dadurch gekennzeichnet,**
**dass** die Stützeinrichtung (60) mindestens ein Krafterzeugungselement aufweist, durch welches die Stützkraft erzeugbar ist.

6. Automobil nach Anspruch 5,
**dadurch gekennzeichnet,**
**dass** das Krafterzeugungselement einen Druckzylinder, insbesondere eine Hydraulikzylinder, aufweist.

7. Automobil nach einem der Ansprüche 1 bis 6,
**dadurch gekennzeichnet,**
**dass** eine Steuerung (62) vorgesehen ist, durch welche die Stützeinrichtung (60) aktiv ansteuerbar ist, wobei die Stützkraft veränderbar ist.

8. Automobil nach Anspruch 7,
**dadurch gekennzeichnet,**
**dass** die Steuerung (62) programmierbar und/oder programmgesteuert betreibbar ist.

9. Automobil nach Anspruch 7 oder 8,
**dadurch gekennzeichnet,**
**dass** ein oder mehrere Sensoren (65, 66) vorgesehen sind, durch welche eine Beschleunigung, eine Geschwindigkeit, eine Andruckkraft der Vorderräder (16) auf den Boden und/oder weitere Fahrzustandswerte erfassbar sind, und
**dass** der eine oder die mehreren Sensoren (65, 66) mit der Steuerung (62) in Verbindung stehen, wobei durch die Steuerung (62) die Stützeinrichtung (60) abhängig von den erfassten Zustandswerten ansteuerbar ist.

10. Verfahren zum Betreiben eines Automobils (10) nach einem der Ansprüche 1 bis 9,
**dadurch gekennzeichnet,**
**dass** bei einem Beschleunigen des Automobils (10) mittels einer Stützeinrichtung (60) zwischen dem mindestens einen Innenrad (29) und dem Fahrzeuggrundkörper (12) eine Stützkraft erzeugt wird, durch welche die Vorderradeinheit (14) des Automobils (10) gegen den Boden gedrückt wird.

## Claims

1. Automobile, comprising
- a vehicle base body (12),
- a front wheel unit (14) having two front wheels (16), which are mounted in a steerable manner on the vehicle base body (12) forming a front wheel axle (17), and
- a rear wheel unit (20), which has at least two rear wheels (26), which are driven and mounted on the vehicle base body (12) forming a first rear wheel axle (27),
- wherein the rear wheel unit (20) additionally has at least one inner wheel (29), which is mounted between the two first rear wheels (26) along a second rear wheel axle (47),
- wherein the second rear wheel axle (47) is axially offset to the rear relative to the first rear wheel axle (27), and
- wherein a supporting device (60) is provided, by means of which a supporting force can be generated between the at least one inner wheel (29) and the vehicle base body (12), by means of which force the front wheel unit (14) can be pressed against the ground when the vehicle (10) accelerates,
**characterised in that**
the first rear wheel (26) of the first rear wheel axle (27) and the at least one inner wheel (29) of the second rear wheel axle (47) are driven.

2. Automobile according to claim 1,
**characterised in that**
two inner wheels (29) are arranged along the second rear wheel axle (47).

3. Automobile according to any one of claims 1 to 2,
**characterised in that**
an axial distance from the first rear wheel axle (27) to the second rear wheel axle (47) is the same or less than a diameter of the rear wheels (26) and/or the inner wheels (29).

4. Automobile according to any one of claims 1 to 3,
**characterised in that**
the rear wheels (26) and/or the at least one inner wheel (29) are each mounted on a wheel suspension rocker (30), which is hollow, and
**in that** a wheel drive shaft is arranged inside the hollow wheel suspension rocker (30) for transmitting a drive torque to the wheel (26, 29) mounted thereon.

5. Automobile according to any one of claims 1 to 4,
**characterised in that**
the supporting device (60) has at least one force generating element, by means of which the supporting force can be generated.

6. Automobile according to claim 5,
**characterised in that**
the force generating element has a pressure cylinder, in particular a hydraulic cylinder.

7. Automobile according to any one of claims 1 to 6,
**characterised in that**
a controller (62) is provided, by means of which the supporting device (60) can be actively controlled, wherein the supporting force can be varied.

8. Automobile according to claim 7,
**characterised in that**
the controller (62) can be operated in a programmable and/or program-controlled manner.

9. Automobile according to claim 7 or 8,
**characterised in that**
one or more sensors (65, 66) are provided, by means of which an acceleration, a speed, a pressure force of the front wheels (16) on the ground and/or other driving state values can be detected, and
the one or more sensors (65, 66) are connected to the controller (62), wherein the supporting device (60) can be controlled by the controller (62) depending on the detected state values.

10. Method for operating an automobile (10) according to any one of claims 1 to 9, **characterised in that**
when the automobile (10) accelerates, a supporting force is generated by means of a supporting device (60) between the at least one inner wheel (29) and the vehicle base body (12), by means of which supporting force the front wheel unit (14) of the automobile (10) is pressed against the ground.

## Revendications

1. Automobile, comprenant
- un corps de base de véhicule (12),
- une unité de roue avant (14) comprenant deux roues avant (16) qui sont montées de façon à pouvoir être dirigées sur le corps de base de véhicule (12) en formant un axe de roue avant (17), et
- une unité de roue arrière (20) comprenant au moins deux roues arrière (26) qui sont entraînées et montées sur le corps de base de véhicule (12) en formant un premier axe de roue arrière (27),
- dans laquelle l'unité de roue arrière (20) comprend en outre au moins une roue intérieure (29) qui est montée entre les deux premières roues arrière (26) le long d'un second axe de roue arrière (47),
- dans laquelle le second axe de roue arrière (47) est décalé axialement vers l'arrière par rapport au premier axe de roue arrière (27), et
- dans laquelle il est prévu un dispositif de support (60) par l'intermédiaire duquel une force de support peut être générée entre ladite au moins une roue intérieure (29) et le corps de base de véhicule (12), force de support grâce à laquelle l'unité de roue avant (14) peut être pressée contre le sol en cas d'accélération de l'automobile (10),
**caractérisée en ce que** les premières roues arrière (26) du premier axe de roue arrière (27) et ladite au moins une roue intérieure (29) du second axe de roue arrière (47) sont des roues entraînées.

2. Automobile selon la revendication 1, **caractérisée en ce que** deux roues intérieures (29) sont agencées le long du second axe de roue arrière (47).

3. Automobile selon l'une quelconque des revendications 1 à 2, **caractérisée en ce qu'**une distance axiale entre le premier axe de roue arrière (27) et le second axe de roue arrière (47) est égale ou inférieure à un diamètre des roues arrière (26) et/ou des roues intérieures (29).

4. Automobile selon l'une quelconque des revendications 1 à 3, **caractérisée en ce que** les roues arrière (26) et/ou ladite au moins une roue intérieure (29) est/sont montée(s) chacune sur un bras oscillant de suspension de roue (30) qui est creux, et **en ce qu'**un arbre d'entraînement de roue est agencé à l'intérieur du bras oscillant de suspension de roue creux (30) dans le but de transmettre un couple d'entraînement à la roue (26, 29) qui est montée sur celui-ci.

5. Automobile selon l'une quelconque des revendications 1 à 4, **caractérisée en ce que** le dispositif de support (60) comprend au moins un élément de génération de force pour générer la force de support.

6. Automobile selon la revendication 5, **caractérisée en ce que** l'élément de génération de force comprend un vérin de pression, en particulier un vérin hydraulique.

7. Automobile selon l'une quelconque des revendications 1 à 6, **caractérisée en ce qu'**il comprend un dispositif de commande (62) par l'intermédiaire duquel le dispositif de support (60) peut être actionné activement, dans laquelle la force de support peut ainsi être modifiée.

8. Automobile selon la revendication 7, **caractérisée en ce que** le dispositif de commande (62) est programmable et/ou peut être exploité par programmation.

9. Automobile selon la revendication 7 ou 8, **caractérisée en ce que**
elle comprend un ou plusieurs capteur(s) (65, 66) pour détecter une accélération, une vitesse, une force de support des roues avant (16) sur le sol et/ou d'autres valeurs d'état de conduite, et **en ce que** ledit/lesdits un ou plusieurs capteur(s) (65, 66) permet(tent) de déterminer la force de support des roues avant (16) sur le sol, et
**en ce que** ledit/lesdits un ou plusieurs capteur(s) (65, 66) est/sont relié(s) au dispositif de commande (62), dans laquelle le dispositif de support (60) peut être activé par le dispositif de commande (62) sur la base des valeurs d'état de conduite collectées.

10. Procédé de fonctionnement d'une automobile (10) selon l'une quelconque des revendications 1 à 9, **caractérisée en ce que**, lors d'une accélération de l'automobile (10), une force de support est générée par l'intermédiaire d'un dispositif de support (60) entre ladite au moins une roue intérieure (29) et le corps de base de véhicule (12), force de support grâce à laquelle l'unité de roue avant (14) de l'automobile (10) est pressée contre le sol.
